# EUROPEAN PATENT APPLICATION

(11) **EP 4 671 647 A2**
(43) Date of publication of application: **31.12.2025**
(21) Application number: 25216186.4
(22) Date of filing: 17.12.2021
(51) Int. Cl.: F25B 45/00, F25B 49/00, B60H 1/00, F25B 43/00

(54) **APPARATUS FOR CHARGING A REFRIGERATION SYSTEM OF A VEHICLE**

(30) Priority: 18.12.2020 IT 202000031481
(62) Divisional of application: 21215455.3
(71) Applicant: NEXION S.p.A., 42015 Correggio (RE) (IT)
(72) Inventor: CORGHI, Giulio, 42015 CORREGGIO (REGGIO EMILIA) (IT)
(74) Representative: Conti, Marco

(57) **Abstract**

**In** an apparatus (1) for charging a refrigeration system of a vehicle, the apparatus (1) comprises a circuit, configured to connect up to the refrigeration system of the vehicle and to extract refrigerant fluid, and a diagnostic system including a plurality of sensors (41, 42, 43, 44, 45, 46) associated with the circuit and configured to detect measurement parameters representing physical quantities linked to one or more of the circuit components; a plurality of actuators configured to control one or more of the components of the circuit; a control unit (4), configured to receive the measurement parameters detected by the sensors of the plurality of sensors (41, 42, 43, 44, 45, 46) and to control the actuators of the plurality of actuators in an offline configuration of the apparatus (1).

## Description

This invention relates to an apparatus and a method for charging a refrigeration system of a vehicle; this invention also relates to a diagnostic system for an apparatus for charging a refrigeration system of a vehicle.

The invention addresses the field of charging apparatuses connectable to vehicle refrigeration systems to charge them with refrigerant fluid and oil. Examples of such apparatuses are described in the following patent documents: US20170336112A1, US20140174111 A1, US20140260354A1, US8406931B2, US7854133B2, EP2856045B1, US8261564B2, US2013319325A1 and US2014260350A1.

In this field, there is the need for a diagnostic tool to test for the correct operation of the charging apparatus and its components. In effect, the apparatus may require maintenance or it may be necessary to carry out certain operations such as charging the tanks with refrigerant fluid and oil or emptying a container of waste oil; in this context, the operator needs to be able to use a tool which allows them to test the operating state of the circuit and to know what maintenance and operations have to be carried out.

This invention has for an aim to provide an apparatus and a method for charging a vehicle refrigeration system, and a diagnostic system for such an apparatus, to overcome at least one of the above mentioned drawbacks of the prior art.

This aim is fully achieved by the apparatus, the method and the diagnostic system of this disclosure as characterized in the appended claims.

According to one aspect it, this disclosure relates to an apparatus for charging a refrigeration system of a vehicle. The apparatus comprises a circuit, configured to be connected up to the refrigeration system of the vehicle; the circuit is configured to extract refrigerant fluid from the refrigeration system of the vehicle.

The circuit includes a distiller. The distiller is configured to receive the refrigerant fluid extracted from the refrigeration system of the vehicle and to separate oil and a gas fraction of the refrigerant fluid. In effect, in the distiller, the refrigerant fluid is preferably heated so as to make it evaporate; the oil, on the other hand, remains in the liquid state. The evaporated fraction of refrigerant fluid is in the gaseous state and is thus separated from the oil. Also imaginable, however, is a distiller without a heating system and where the gas fraction is extracted from above.

The circuit includes a compressor, configured to receive the gas fraction of refrigerant fluid from the distiller and to compress it.

The circuit includes a waste oil collector to collect the oil separated by the distiller. In effect, at the end of the distillation process, all the refrigerant fluid has evaporated and the waste oil remains at the bottom of the distiller.

The circuit includes a refrigerant fluid tank, containing refrigerant fluid and configured to receive the refrigerant fluid compressed by the compressor.

The circuit includes a vacuum pump, configured to create a negative pressure in the refrigeration system of the vehicle.

The circuit includes a charging oil tank, configured to contain the oil used for charging. The circuit is configured to charge the refrigeration system of the vehicle with the charging oil from the charging oil tank and with the refrigerant fluid from the refrigerant fluid tank. In effect, after the refrigerant fluid has been extracted, the vacuum pump is started to create a vacuum in the vehicle's refrigeration system in order to remove traces of moisture and to create the conditions for subsequent filling with oil and refrigerant liquid. Thus, charging follows on after starting the vacuum pump.

The apparatus comprises a diagnostic system. The diagnostic system includes a plurality of sensors associated with the circuit (or with one of its components) and configured to detect measurement parameters representing physical quantities linked to one or more of the circuit components.

The apparatus comprises a plurality of actuators configured to control one or more of the components of the circuit.

The apparatus comprises a control unit. The control unit is configured to operate the apparatus in (or set it to) an online configuration (i.e., a connected configuration), in which the apparatus is connected to the refrigeration system of the vehicle to perform charging operations, and in an offline configuration (i.e., a disconnected configuration), in which the apparatus is disconnected from the refrigeration system of the vehicle.

Regarding the definition of online configuration, we observe that the concept of online configuration includes, *inter alia*, the following examples:
(i) apparatus mechanically connected to the vehicle refrigeration system, also for the purpose of data transfer;
(ii) non-mechanically connected equipment, for data transfer and or charging, for example via a non-mechanical Wireless connection (which in any case can also allow electric charging).

Furthermore, regarding the definition of offline configuration, we observe that the concept of offline configuration includes, *inter alia*, the following examples:
(i) equipment mechanically disconnected from the vehicle refrigeration system and absence of any other non-mechanical connection for the purpose of data transfer of charging;
(ii) equipment disconnected from the vehicle's refrigeration system with respect to a wireless connection;
(iii) equipment mechanically linked to the vehicle's refrigeration system but data and / or electricity transfer interrupted.

The control unit is also configured to receive the measurement parameters detected by the sensors of the plurality of sensors and to control the actuators of the plurality of actuators; more specifically, the measurement parameters are received and the actuators controlled at least partly in the offline configuration of the apparatus.

Moreover, the control unit is configured to switch the apparatus between the online configuration and the offline configuration.

However, some of the measurement parameters may be received and the actuators controlled in the online configuration. That way, a user or operator may perform a diagnosis of the apparatus. In effect, in an embodiment, the user can enable or disable certain components by means of specific actuators and can read the values of the measurement parameters detected by the sensors; in this embodiment, a diagnosis of the apparatus, specifically to identify faulty conditions, if any, is performed by the user on the basis of the measurement parameter values read. In another embodiment, the control unit has access to a memory containing reference data and is configured to process the measurement parameters detected by the sensors based on the reference data in order to derive diagnostic information correlated with the operation of the circuit; in this embodiment, the diagnosis of the apparatus is performed by the control unit and the user receives the diagnostic information derived; for example, the diagnostic information may represent a certain faulty condition identified by the control unit.

In an embodiment, the diagnostic system comprises an interface that is connected to the control unit. The interface is configured to allow the user to selectively enable or disable the sensors of the plurality of sensors. The interface is configured to allow the user to selectively control the actuators of the plurality of actuators; the control unit is configured to generate commands to drive the actuators of the plurality of actuators in response to settings received from the user. The interface is configured to allow the user to display the measurement parameters detected by the sensors and/or diagnostic parameters derived therefrom. More specifically, in the case where the control unit derives the diagnostic parameters based on the measurement parameters, the interface is configured to show the diagnostic parameters (and, in one embodiment, the measurement parameters, too). In an embodiment, the interface is configured to show a synoptic representation of the circuit to a user. More specifically, the synoptic representation is configured to allow the user to selectively enable or disable the sensors of the plurality of sensors and/or to selectively control the actuators of the plurality of actuators through interactions between the user and the synoptic representation. Preferably, the synoptic representation is also configured to show the user the measurement parameters detected by the enabled sensors forming part of the plurality of sensors. The synoptic representation makes interaction between the user and the apparatus particularly easy.

The control unit may be local or remote. The interface may also be local or remote. The interface may be defined by a PC, a laptop, a smartphone or a tablet of the user. The interface comprises an input device configured to receive the settings from the user.

More specifically, in an embodiment in which the interface is a remote interface, the apparatus comprises a remote processor connected to the control unit and to the interface. For example, the remote processor may be the processor of the smartphone or of the tablet. The remote processor is configured to send control signals to the control unit as a function of the settings received from the user (through the interface); the control unit is configured to issue commands to one or more of the actuators of the plurality of actuators, responsive to receiving the control signals. Thus, the user selectively enables or disables the sensors and the actuators through the interface, which may be a remote interface; this allows an expert user to perform a diagnosis of the apparatus without having to travel to the site or workshop where the apparatus is installed.

Preferably, the actuators of the plurality of actuators are selected from the following actuators: a plurality of electrovalves (associated with different legs of the circuit), an actuator of the compressor, configured to control the compressor, an actuator of the vacuum pump, configured to control the vacuum pump.

Preferably, the plurality of sensors includes a first load sensor, associated with the refrigerant fluid tank and configured to detect a measurement parameter representing the weight of the refrigerant fluid tank. The weight of the refrigerant fluid tank represents the quantity of refrigerant fluid it contains. More specifically, the control unit calculates the weight of the refrigerant fluid inside the tank by subtracting the net weight of the tank (known and stored in the memory) from the value of the weight detected. When the quantity of refrigerant fluid in the tank falls below a predetermined minimum value, the system must be charged with refrigerant fluid. The predetermined minimum value is stored in the memory; the memory also includes a library which associates with each type of vehicle to be charged a corresponding predetermined minimum value of refrigerant fluid and the control unit selects the predetermined minimum value as a function of the input information received from the user and representing the type of vehicle to be charged.

Preferably, the plurality of sensors includes a second load sensor, associated with the waste oil collector and with the charging oil tank and configured to detect a measurement parameter representing the weight of the waste oil collector and of the charging oil tank. More specifically, the second load sensor measures the weight of the tanks (plus their supports) together. The control unit calculates the weight of each of the tanks using algorithms which associate a variation of the weight of the tanks with an increase or decrease of the content of one of them and the tank which has undergone the variation is identified based on the steps of the process in progress at the time of the variation; thus, this diagnosis is performed at least partly with the apparatus in the online configuration. For example, if the sensor detects a decrease in the weight of the tanks during the step of charging, the control unit determines that the charging oil tank has been emptied of the quantity of oil corresponding to the decrease in the weight. In an embodiment, the control unit keeps track of these variations to calculate the absolute quantity of oil present in the tanks and allows the user to know when to empty the waste oil tank and to fill the charging oil tank.

In an embodiment, the plurality of sensors includes a plurality of oil load sensors, each of which is associated with a respective oil tank, to measure its respective weight: more specifically, there may be a first oil load sensor associated with the waste oil tank and a second oil load sensor associated with the charging oil tank; if an additional charging oil tank is provided, there may also be a third oil load sensor associated with the additional charging oil tank. These oil load sensors may be provided in addition or alternatively to the second load sensor.

Preferably, the plurality of sensors includes a first pressure sensor, associated with an inlet or outlet leg of the circuit, connectable to the refrigeration system of the vehicle and configured to detect a measurement parameter representing a pressure of the refrigerant fluid in the inlet or outlet leg.

Preferably, the plurality of sensors includes a second pressure sensor, associated with the refrigerant fluid tank and configured to detect a measurement parameter representing a pressure of the refrigerant fluid in the refrigerant fluid tank.

Preferably, the plurality of sensors includes a temperature sensor, associated with the refrigerant fluid tank and configured to detect a measurement parameter representing a temperature of the refrigerant fluid in the refrigerant fluid tank.

More specifically, the control unit determines, as a function of the temperature and pressure of the refrigerant fluid inside the refrigerant fluid tank and based on the pressure and temperature curves of the refrigerant fluid, whether the tank contains pure refrigerant or also air or other substances. In effect, at a certain temperature, if there is only refrigerant, the pressure has a certain value (given by the curves), whereas the presence of air causes it to have a different pressure. The pressure of the refrigerant fluid may be determined by the second pressure sensor (if provided) or by the first pressure sensor, by driving specific electrovalves to put the refrigerant fluid tank in communication with the circuit leg where the first pressure sensor is installed. Thus, the first and/or the second pressure sensor are useful for determining the presence of air in the refrigerant fluid. The first pressure sensor can also be used to check the circuit for leaks.

More specifically, specific electrovalves are activated to isolate the circuit and to start the vacuum pump to generate negative pressure; the pressure detected by the first sensor is then monitored for changes over time. If there are no significant leaks, the pressure detected by the first sensor remains constant; if there are significant leaks, on the other hand, air enters and the pressure detected by the first sensor increases. Leaks, if any, can then be precisely located by suitably opening and closing the electrovalves.

Preferably, the plurality of sensors includes a compressor sensor, associated with the compressor and configured to detect a measurement parameter representing a speed of the compressor. The compressor sensor may be, for example, a tachymetric sensor that detects the speed of the compressor, or a current sensor that detects the current absorbed by the compressor. The compressor sensor allows checking the operating state of the compressor to identify any faults.

This disclosure also provides a diagnostic system for an apparatus for charging a refrigeration system of a vehicle. The diagnostic system may be installed in an existing apparatus. The diagnostic system is according to one or more aspects of this disclosure.

This disclosure also provides a method for charging a refrigeration system of a vehicle by means of an apparatus including a circuit and a diagnostic system. The apparatus is characterized by one or more aspects of this disclosure.

The method comprises a step of connecting the circuit to the refrigeration system of the vehicle and extracting refrigerant fluid. The method comprises a step of receiving at a distiller the refrigerant fluid extracted from the refrigeration system of the vehicle and separating oil and a gas fraction of the refrigerant fluid. The method comprises a step of compressing the gas fraction of the refrigerant fluid using a compressor. The method comprises a step of feeding the refrigerant fluid compressed by the compressor to a refrigerant fluid tank. The method comprises a step of collecting the oil separated by the distiller in a waste oil collector. The method comprises a step of creating a negative pressure in the refrigeration system of the vehicle by means of a vacuum pump. The method comprises a step of charging the refrigeration system of the vehicle with the charging oil from the charging oil tank and with the refrigerant fluid from the refrigerant fluid tank.

The method comprises a step of switching the apparatus, through a control unit, between an online configuration, in which the apparatus is connected to the refrigeration system of the vehicle to perform charging operations, and an offline configuration, in which the apparatus is disconnected from the refrigeration system of the vehicle to perform internal checks for diagnostic purposes. More specifically, in the offline configuration, it is possible to perform a diagnosis of the apparatus itself, independently of the vehicle.

The method comprises a step of detecting, with at least one plurality of sensors associated with the circuit, measurement parameters representing physical quantities linked to one or more of the circuit components. Preferably, this step of detecting the measurement parameters is carried out at least partly in the offline configuration; it might, however, also be carried out in the online configuration.

The method also comprises a step of receiving at the control unit the measurement parameters detected by the sensors of the plurality of sensors. Preferably, this step of receiving the measurement parameters is carried out at least partly in the offline configuration; it might, however, also be carried out in the online configuration.

Through an interface, a user might selectively enable or disable the sensors of the plurality of sensors. Preferably, through the interface, the user can display the measurement parameters detected by the enabled sensors and/or diagnostic parameters derived therefrom.

Preferably, also, the user might, through the interface, selectively control the actuators of the plurality of actuators and the control unit might generate commands to drive the actuators of the plurality of actuators in response to settings received from the user.

In an embodiment, the method comprises a step of processing the measurement parameters with the control unit, based on reference data, and deriving diagnostic information regarding the state of the circuit or a component thereof. The reference data are stored in a memory. Preferably, for each vehicle type of a plurality of vehicle types, the memory includes respective reference data associated with that vehicle type.

In an embodiment, the method comprises a step of providing the user, through the interface, with the measurement parameters and/or the diagnostic information; more specifically, the user interface shows a synoptic representation of the circuit to the user.

In an embodiment, the control unit is configured to set the circuit to a predefined test configuration and to derive the diagnostic information as a function of the measurement parameters detected in the predefined test configuration.

In an embodiment, the method comprises a step of updating the memory by saving new reference data (or new databases) associated with a new vehicle type. More specifically, the memory (or the control unit) receives the new reference data from a remote source through an Internet connection. In another embodiment, the memory can be updated using a USB key (or other data storage medium) in which the updates have previously been stored. In another embodiment, the memory can be updated through the user interface, which receives the new reference data (for example, from a remote source) and sends them to the memory.

In an embodiment, the plurality of sensors includes a first load sensor, associated with the refrigerant fluid tank, so the measurement parameter represents the weight of the refrigerant fluid tank. In the step of processing, the control unit compares the weight of the refrigerant fluid tank detected by the load sensor with a predetermined minimum value and starts the step of charging if the weight of the refrigerant fluid tank exceeds the predetermined minimum value. In this context, the predetermined minimum value is one of the reference data items stored in the memory.

In an embodiment, the plurality of sensors includes a second load sensor, associated with the waste oil collector and with the charging oil tank and configured to detect a measurement parameter representing the weight of the waste oil collector and of the charging oil tank. The control unit is configured to store a history of the values adopted by the measurement parameter representing the weight of the waste oil collector and of the charging oil tank (in the online configuration and/or in the offline configuration) and to derive diagnostic information representing a filling level of the waste oil collector and of the charging oil tank. In an embodiment, the diagnostic information is derived as a function of the values adopted by the measurement parameter representing the weight of the waste oil collector and of the charging oil tank during different stages of charging, when the apparatus is connected to the vehicle (hence in the online configuration).

In an embodiment, the plurality of sensors includes a first pressure sensor, associated with an inlet or outlet leg of the circuit, connectable to the refrigeration system of the vehicle and configured to detect a measurement parameter representing a pressure of the refrigerant fluid in the inlet or outlet leg. The vacuum pump is connected to the inlet or outlet leg. Thus, the control unit starts the vacuum pump to set the circuit to a predefined test configuration and compares a pressure value, or a trend over time of the refrigerant fluid pressure in the inlet or outlet leg, as detected by the first pressure sensor, with a predefined pressure value or a predefined pressure trend. The predefined pressure value and/or the predefined pressure trend are reference data items stored in the memory.

That way, the control unit can derive diagnostic information representing an operating state of the vacuum pump; in effect, if the value reached by the pressure deviates significantly from the predefined value, this may be due to a malfunction of the vacuum pump.

In addition, or alternatively, the control unit may derive diagnostic information representing a presence of leaks in the circuit. In effect, as noted above, by opening or closing specific electrovalves and creating a negative pressure in the circuit using the vacuum pump, leaks in the circuit, if any, allow air to enter the circuit and so the pressure detected by the first sensor increases over time. In this case, therefore, the pressure trend detected deviates from the predefined pressure trend.

This disclosure also provides a diagnostic method for performing a diagnosis of an apparatus for charging a refrigeration system of a vehicle. The method comprises the following steps: switching the apparatus, through a control unit, between an online configuration, in which the apparatus is connected to the refrigeration system of the vehicle to perform charging operations, and an offline configuration, in which the apparatus is disconnected from the refrigeration system of the vehicle to perform internal checks for diagnostic purposes; in the offline configuration, detecting, with at least one plurality of sensors associated with the circuit, measurement parameters representing physical quantities linked to one or more of the circuit components; in the offline configuration, receiving at the control unit the measurement parameters detected by the sensors of the plurality of sensors; in the offline configuration, sending commands to one or more of the components of the circuit by means of a plurality of actuators controlled by the control unit.

These and other features will become more apparent from the following detailed description of a preferred embodiment, illustrated by way of non-limiting example in the accompanying drawings, in which:

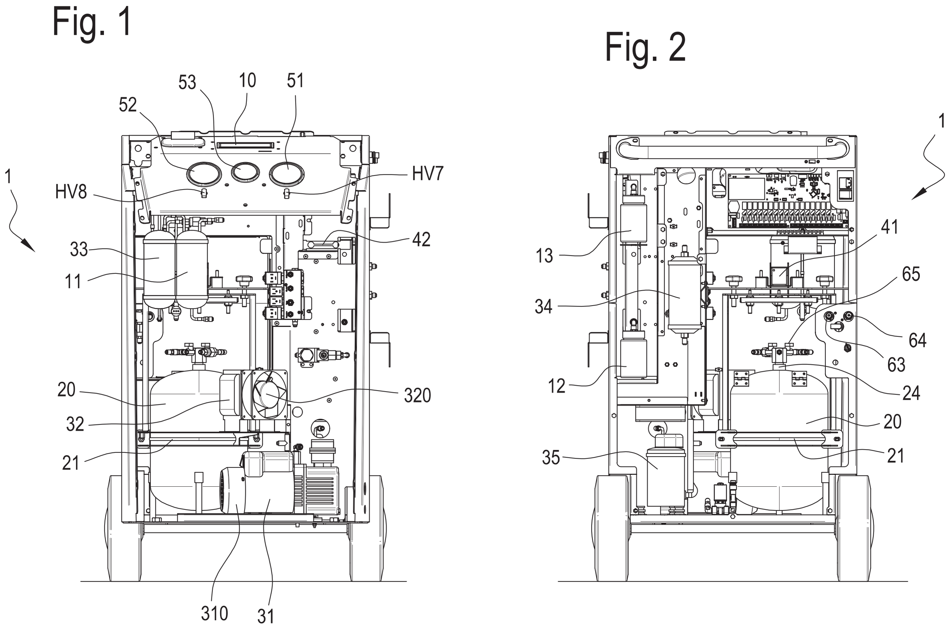

- Figure 1 shows an apparatus according to this disclosure in a first view;
- Figure 2 shows the apparatus of Figure 1 in a second view;

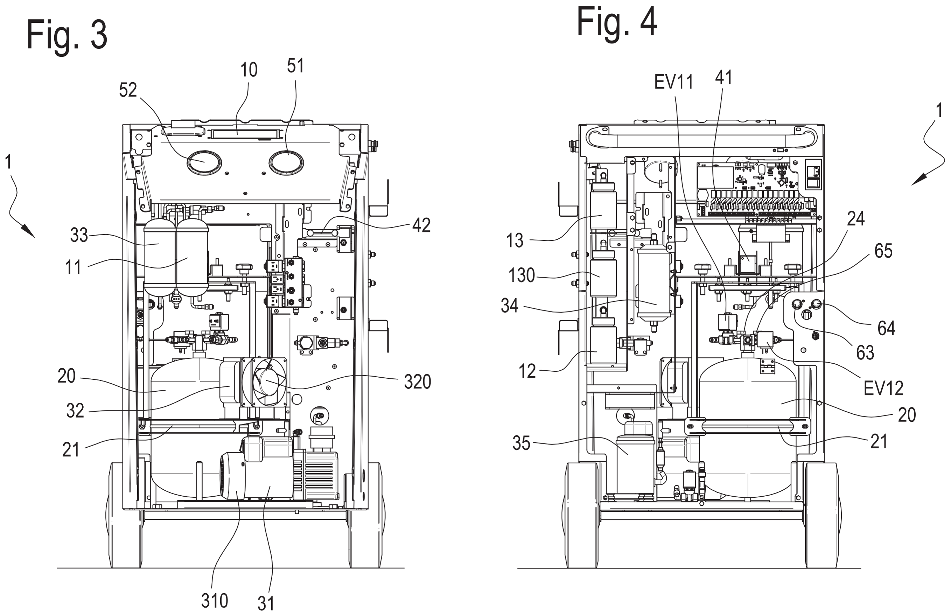

- Figure 3 shows a further embodiment of the apparatus of this disclosure in a first view;
- Figure 4 shows the apparatus of Figure 3 in a second view;

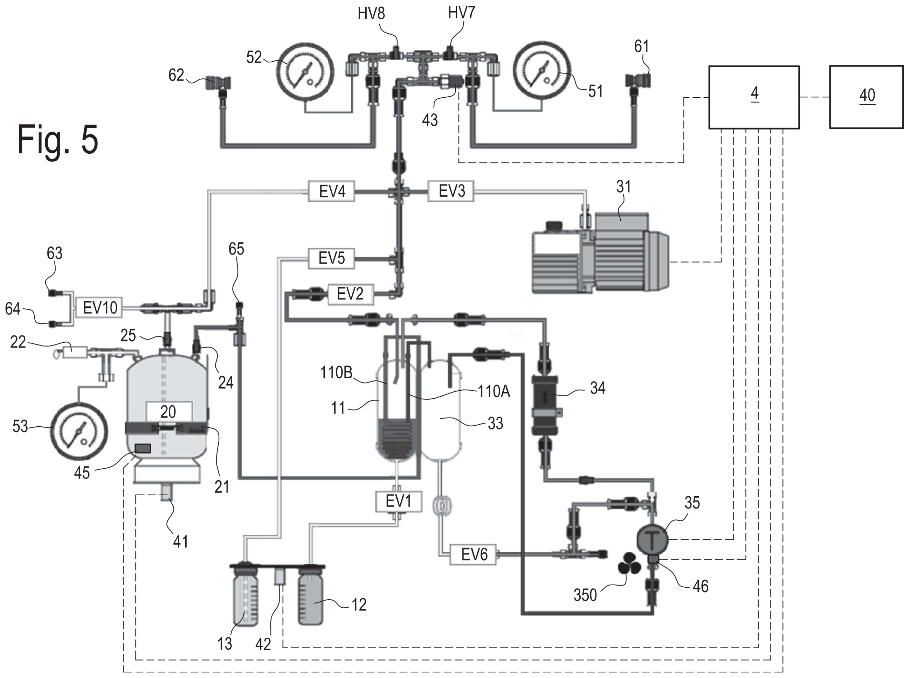

- Figure 5 shows a synoptic representation of the apparatus of Figures 1 and 2;

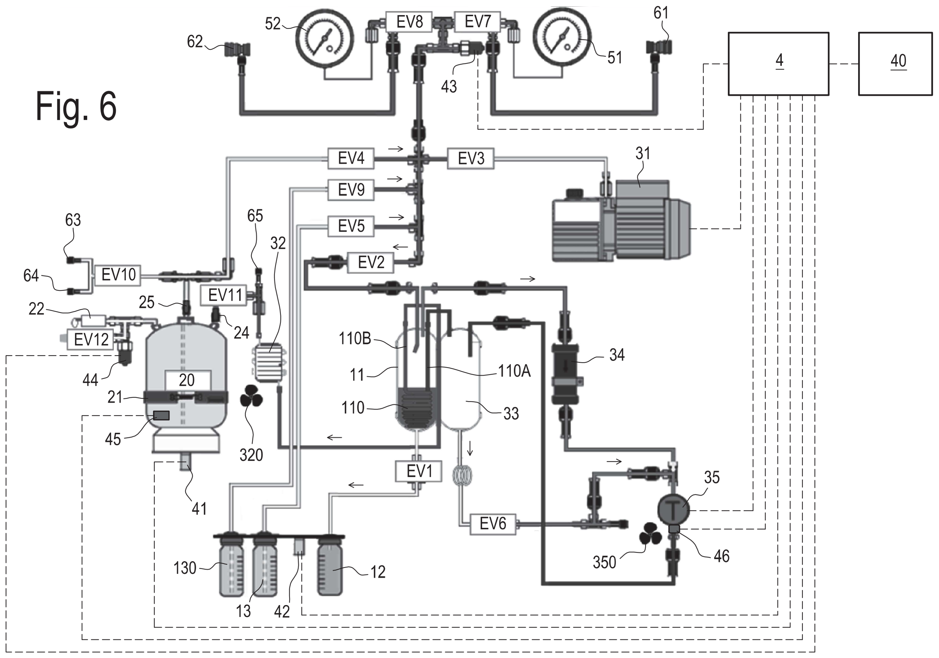

- Figure 6 shows a synoptic representation of the apparatus of Figures 3 and 4;

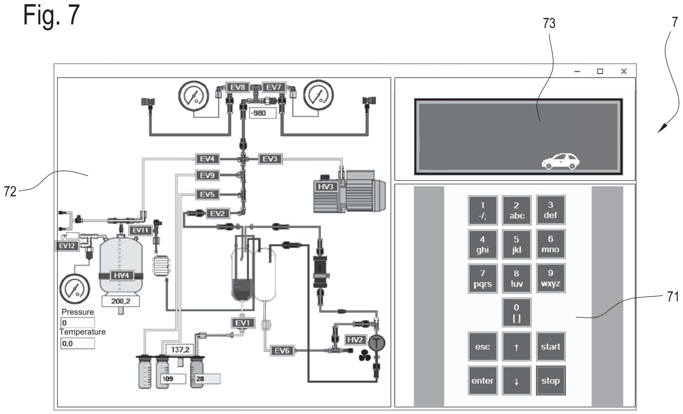

- Figure 7 shows an example of a user interface of the apparatus of Figures 1 and 2 or of Figures 3 and 4.

With reference to the accompanying drawings, the numeral 1 denotes an apparatus for charging a refrigeration system of a vehicle. The apparatus 1 comprises a circuit. The circuit has a first inlet 61, configured to be connected to the vehicle's refrigeration system in a low pressure zone. The circuit has a second inlet 62, configured to be connected to the vehicle's refrigeration system in a high pressure zone. In an embodiment not illustrated, there is a single inlet.

The circuit comprises a distiller 11 which receives the refrigerant fluid from the first inlet 61 or from the second inlet 62. The distiller 11 includes a closed container and a coil which passes through the container; the refrigerant fluid coming from the first inlet 61 or from the second inlet 62 is heated by the coil and evaporates. The gas fraction flows out through the top of the container, while the oil does not evaporate and remains on the bottom of the container. The waste oil is then extracted from the bottom of the container and collected in a waste oil tank (or collector) 12. Collection of the waste oil occurs only at specific times, when EV1 is open.

The circuit comprises a dehydrator filter 34 and a compressor 35, located in the leg of the circuit extending from the top of the distiller 11. The compressor 35 is located downstream of the dehydrator filter 34. The circuit comprises a fan 350 for cooling the compressor 35. The compressor 35 compresses the refrigerant fluid in the gas state and pumps it towards an oil separator 33. In the oil separator 33, the lubricating oil of the compressor is separated, by precipitation, from the compressed refrigerant fluid. In effect, the compressor 35 leaves a certain amount of lubricating oil in the refrigerant fluid during compression. The refrigerant fluid flows out from the top of the oil separator 33 and flows along the coil 110 from an inlet 110A to an outlet 110B. In effect, as a result of compression, the temperature of the fluid increases and is thus suitable for heating the fluid arriving in the distiller 11. The lubricating oil that is separated in the oil separator 33 is sent back to the compressor 35.

In an embodiment, the circuit comprises a condenser or radiator 32, and a respective fan 320.

The circuit also comprises a tank 20 for the refrigerant fluid. The refrigerant fluid from the compressor 35 passes through the coil 110 and then through the condenser 32 (if provided) and arrives at the refrigerant fluid tank 20, where it is stored.

The refrigerant fluid continues to be extracted from the vehicle's system and fed into the refrigerant fluid tank 20 along the path indicated above until the vehicle's system is empty.

The circuit comprises a vacuum pump 31 and a respective fan 310. Once all the refrigerant fluid has been extracted from the vehicle's system and fed into the refrigerant fluid tank 20 the vacuum pump 31 is started to create a negative pressure inside the vehicle's system. This operation serves both to eliminate traces of moisture in the vehicle's system and to create the condition for subsequent charging with oil and refrigerant liquid.

Once the negative pressure environment has been created in the circuit and in the vehicle's system, oil charging is started. The circuit comprises a charging oil tank 13; in an embodiment, the circuit may comprise an additional charging oil tank 130. In effect, vehicle systems may use a poly alkylene glycol (PAG) oil or a polyolester (POE) oil. The apparatus might select which charging oil tank to use, between 13 or 130, as a function of the type of vehicle. During charging, the oil is fed into the tank 13 or 130 by the action of the pressure difference between the tank and the vehicle's system. The oil is fed in first because it is heavier than the refrigerant liquid. After that, charging continues by feeding in the refrigerant fluid. This operation, too, is accomplished by the action of the pressure difference between the refrigerant fluid tank 20 and the vehicle's system. To facilitate the egress of refrigerant fluid from the tank 20, a heater 21 associated with the tank 20 (specifically surrounding the tank 20) is provided. The heater 21 raises the temperature of the refrigerant fluid in the tank 20.

The circuit comprises a charging tap 25, which is opened to allow the egress of refrigerant fluid towards the inlets 61 and 62 (which also serve as outlets). The circuit also comprises a relief valve 22, associated with the refrigerant fluid tank 20.

The circuit also comprises a low pressure recovery tap 24, connected to an outlet 65 of the circuit. The tap 24 is used for a manual operation carried out only when necessary: in effect, using the tap 24 (and closing the line towards the tank 20) allows access through the outlet 65 to an external bottle for collecting any unwanted immiscible gases which have found their way into the vehicle's system, hence into the circuit of the apparatus.

The circuit comprises a first full hybrid system (FHS) fitting 63 and a second FHS fitting 64. The first FHS fitting 63 and the second FHS fitting 64 are configured to be connected to the first inlet 61 and to the second inlet 62 in the offline configuration. More specifically, the FHS fittings 63 and 64 are used to clean the circuit: after connecting the first inlet 61 and the second inlet 62 to the FHS fittings 63 and 64, the clean command can be given. In this mode, a small amount of refrigerant liquid present in the tank 20 is circulated in the circuit and allows the oil remaining in the circuit to be flushed out. The full hybrid system (FHS) function allows flushing the external pipes of the apparatus, including the internal circuit of the new oil. The apparatus 1 comprises a control unit 4. The apparatus 1 comprises a plurality of electrovalves, controlled by the control unit 4. The plurality of electrovalves includes two or more of the following electrovalves:
- a first electrovalve EV1, having a closed position, which stops the outflow of liquid from the distiller 11, and an open position, which allows the outflow of the waste oil from the distiller 11 to the waste oil collector 12;
- a second electrovalve EV2, having a closed position, which stops the passage of refrigerant fluid towards the distiller 11, and an open position, which allows the passage of the refrigerant fluid towards the distiller 11;
- a third electrovalve EV3, having a closed position, which isolates the vacuum pump 31 from the rest of the circuit, and an open position, which puts the vacuum pump 31 in communication with the rest of the circuit;

- a fourth electrovalve EV4, having a closed position, which stops the passage of the refrigerant fluid from the tank 20 towards the inlets (or outlets) 61 and 62, and an open position, which allows the passage of the refrigerant fluid from the tank 20 towards the inlets (or outlets) 61 and 62;
- a fifth electrovalve EV5, having a closed position, which stops the passage of the charging oil from the charging oil tank 13 towards the inlets (or outlets) 61 and 62, and an open position, which allows the passage of the charging oil from the charging oil tank 13 towards the inlets (or outlets) 61 and 62;
- a sixth electrovalve EV6, having a closed position, which stops the outflow of the lubricating oil from the oil separator 33, and an open position, which allows the outflow of the lubricating oil from the oil separator 33, towards the compressor 35;
- a seventh electrovalve EV7, having a closed position, which stops the passage of the refrigerant fluid from the first inlet 61 to the rest of the circuit (and vice versa), and an open position, which allows the passage of the refrigerant fluid from the first inlet 61 to the rest of the circuit (and vice versa);
- an eighth electrovalve EV8, having a closed position, which stops the passage of the refrigerant fluid from the second inlet 62 to the rest of the circuit (and vice versa), and an open position, which allows the passage of the refrigerant fluid from the second inlet 62 to the rest of the circuit (and vice versa);
- a ninth electrovalve EV9, having a closed position, which stops the passage of the charging oil from the additional charging oil tank 130 (if provided) towards the inlets (or outlets) 61 and 62, and an open position, which allows the passage of the charging oil from the additional charging oil tank 130 towards the inlets (or outlets) 61 and 62;
- a tenth electrovalve EV10, having a closed position, which stops the passage of the refrigerant fluid from the first and/or the second FHS fitting 63, 64 to the rest of the circuit (and vice versa), and an open position, which allows the passage of the refrigerant fluid from the first and/or the second FHS fitting 63, 64 to the rest of the circuit (and vice versa);
- an eleventh electrovalve EV11, having a closed position, which stops the passage of the refrigerant fluid from the condenser 32 to the refrigerant fluid tank 20, and an open position, which allows the passage of the refrigerant fluid from the condenser 32 to the refrigerant fluid tank 20;
- a twelfth electrovalve EV12, having a closed position, which stops the passage of fluid from the tank 20 to an outlet of the circuit, and an open position, which allows the passage of fluid from the tank 20 to an outlet of the circuit. More specifically, operating EV12 allows the air remaining in suspension in the tank to escape to the outside atmosphere. The twelfth electrovalve EV12 is connected in parallel with the relief valve 22.

During extraction of the refrigerant fluid from the vehicle's system, the second, seventh and eighth electrovalves, EV2, EV7 and EV8 are open and the other electrovalves are closed.

During the step of collecting the waste oil in the waste oil tank 12, the first electrovalve EV1 is opened.

During the step of recirculating the lubricating oil from the oil separator 33 to the compressor, the sixth electrovalve EV6 is opened.

During the step of creating negative pressure in the circuit, the third electrovalve EV3 is opened.

During the step of charging the vehicle's system with the refrigerant fluid, the fourth electrovalve EV4 is opened.

During the step of charging the vehicle's system with the charging oil, the fifth electrovalve EV5 or the ninth electrovalve EV9 is opened (depending on the type of oil being used).

It should be noted that in an embodiment, manual valves HV7 and HV8 might be provided instead of the seventh electrovalve EV7 or the eighth electrovalve EV8.

The apparatus 1 comprises a plurality of sensors, connected to the control unit 4. The plurality of sensors comprises two or more of the following sensors:
- a first load sensor 41, associated with the refrigerant fluid tank 20 and configured to detect a measurement parameter representing the weight of the refrigerant fluid tank;
- a second load sensor 42, associated with the waste oil collector 12 and with the charging oil tank 13 (and, if provided, with the additional charging oil tank 130) and configured to detect a measurement parameter representing the weight of the waste oil collector 12 and of the charging oil tank 13 (and, if provided, of the additional charging oil tank 130); more specifically, the second load sensor 42 detects the weight of the tanks 12, 13 (and, if provided, 130) and of their support; during the step of collecting the waste oil in the waste oil tank 12, an increase in the weight detected by the second load sensor 42 can be attributed to filling of the waste oil tank 12; instead, during the step of charging the vehicle's system with charging oil, a decrease in the weight detected by the second load sensor 42 can be attributed to emptying the charging oil tank 13 or 130; in an embodiment, the first load sensor 41 and/or the second load sensor 42 are load cells;
- a first pressure sensor 43, associated with an inlet or outlet leg of the circuit (between the inlets 61 and 62 and the rest of the circuit), and configured to detect a measurement parameter representing the pressure of the refrigerant fluid in the circuit;
- a second pressure sensor 44, associated with the refrigerant fluid tank 20 and configured to detect a measurement parameter representing the pressure of the refrigerant fluid in the tank 20;
- a temperature sensor 45, associated with the refrigerant fluid tank 20 and configured to detect a measurement parameter representing the temperature of the refrigerant fluid in the refrigerant fluid tank 20;
- a compressor sensor 46, associated with the compressor 35 and configured to detect a measurement parameter representing the speed of the compressor 35.

The apparatus 1 may comprise a first pressure gauge 51 and a second pressure gauge 52, configured to detect and display the pressure of the refrigerant fluid at the first and second inlets 61 and 62, respectively.

The apparatus 1 may also comprise a third pressure gauge 53, configured to detect and display the pressure of the refrigerant fluid in the refrigerant fluid tank 20.

The apparatus 1 comprises a memory 40, connected to the control unit 4 and containing reference data. The control unit 4 is configured to compare the measurement parameters detected by the sensors with the reference data to derive diagnostic information regarding the operation of the circuit. The apparatus 1 comprises a local interface 10. In an embodiment, the local interface 10 comprises a display and a keypad; in another embodiment, the local interface 10 comprises a touchscreen display. The local interface 10 is connected to the control unit 4.

The apparatus 1 comprises a remote interface 7; in an embodiment, the remote interface 7 allows controlling the control unit 4; the control unit 4 in turn allows controlling the local interface 10.

The remote interface 7 is configured to show a synoptic representation 72 of the circuit; the synoptic representation 72 shows a diagram of the circuit; preferably also shown are the values of the measurement parameters detected by one or more of the sensors. In an embodiment, the synoptic representation 72 shows the states (on or off) of the actuators. Through the synoptic representation 72, the user can selectively enable or disable the sensors, the electrovalves, the compressor 35 and the vacuum pump 31.

The remote interface 7 comprises an input device (or keypad) 71. Through the input device 71, the user can enter or modify reference parameters or they can relax certain constraints to force the apparatus to operate in anomalous conditions. For example, if the control unit 4 is configured to stop the circuit from operating if the vacuum pump 31 is unable to create a predefined negative pressure, the operator can relax the constraint by modifying the predefined negative pressure through the interface 7. The input device 71 reproduces the keypad present on the local interface 10, thereby allowing it to be controlled from a remote position.

The remote interface 7 comprises a display 73 which reproduces the display of the local interface 10 so that a user, working from a remote position, can obtain the same information that would be available from the local interface 10.

Through the interface 7, the user can perform different tests to identify circuit malfunctions, if any. For example, they can check the operation of the vacuum pump 31 by connecting it to the first pressure sensor 43 (by opening the third electrovalve EV3 and closing the other electrovalves); failure to reach a predetermined negative pressure indicates that the vacuum pump 31 is not functioning correctly; the malfunction diagnosis can be performed by the user, based on personal know-how, or by the control unit 4 (which compares the current negative pressure value with the predetermined value stored in the memory 40). When the control unit 4 performs the diagnosis, it can block the circuit if there is a malfunction. However, if the negative pressure is close to the threshold, the user can set some temporary operating parameters (for example, changing the negative pressure threshold, thus relaxing the constraint) to allow operation in "emergency mode" pending arrival of the necessary spare part.

Through the remote interface 7, the user can identify malfunctions of the compressor 35 by reading the measurement parameter detected by the compressor sensor 46.

Through the remote interface 7, the user can check the level of the waste oil tank 12 and of the charging oil tanks 13 and 130; more specifically, this can be done by reading the history of the measurement parameters detected by the second load sensor 42.

In addition, by isolating the circuit from the external environment and creating a negative pressure with the vacuum pump 31, the user can also check the circuit for leaks. In effect, if there are leaks, air enters the circuit and the pressure detected by the first sensor increases significantly, so the pressure trend over time deviates significantly from a predefined pressure trend.

The apparatus 1 can also be used to perform a diagnosis of the vehicle's system. More specifically, to check whether the vehicle system has a significant micro leak in it, a micro leak test can be performed by creating a vacuum inside the circuit using the vacuum pump 31, then stopping the vacuum pump 31, closing the third electrovalve EV3 and monitoring the differential pressure detected by the first pressure sensor 43 over time: if the pressure remains stable (little or no pressure variations) it means the system is sealed; if the pressure increases (pressure variations exceeding a certain threshold), it means there is a leak. In this case, before proceeding to charging, the user must repair the vehicle's system.

In an embodiment, the micro leak test is performed during the step in which there is a negative pressure in the vehicle's refrigeration system after the vacuum pump has been started. More specifically, once the negative pressure has been created, the vacuum pump is turned off for a predetermined length of time. During this predetermined length of time, the pressure in the circuit is monitored over time. The step of combining the micro leak test with the step of creating the negative pressure in the vehicle's refrigeration system allows saving time.

The following paragraphs, listed in alphanumeric order for reference, are non-limiting example modes of describing this invention.

A. An apparatus (1) for charging a refrigeration system of a vehicle, wherein the apparatus (1) comprises a circuit, configured to be connected to the refrigeration system of the vehicle and to extract refrigerant fluid, wherein the circuit includes the following components:
- a distiller (11) configured to receive the refrigerant fluid extracted from the refrigeration system of the vehicle and to separate oil and a gas fraction of the refrigerant fluid;
- a compressor (35), configured to receive the gas fraction of refrigerant fluid from the distiller (11) and to compress it;
- a waste oil collector (12) for collecting the oil separated by the distiller (11);
- a refrigerant fluid tank (20), containing refrigerant fluid and configured to receive the refrigerant fluid compressed by the compressor (35);
- a vacuum pump (31), configured to create a negative pressure in the refrigeration system of the vehicle;
- a charging oil tank (13), configured to contain the oil used for charging,

wherein the circuit is configured to charge the refrigeration system of the vehicle with the charging oil from the charging oil tank (13) and with the refrigerant fluid from the refrigerant fluid tank (20),
the apparatus being characterized in that it further comprises a diagnostic system including:
   a plurality of sensors (41, 42, 43, 44, 45, 46) associated with the circuit and configured to detect measurement parameters representing physical quantities linked to one or more of the circuit components;
   - a plurality of actuators, configured to control one or more of the components of the circuit;
   - a control unit (4), configured for
      operating the apparatus in an online configuration, in which the apparatus is connected to the refrigeration system of the vehicle to perform the charging operations, and in an offline configuration, in which the apparatus is disconnected from the refrigeration system of the vehicle, and for
      receiving the measurement parameters detected by the sensors of the plurality of sensors (41, 42, 43, 44, 45, 46) and controlling the actuators of the plurality of actuators in the offline configuration of the apparatus.

A2. The apparatus (1) according to paragraph A1, wherein the diagnostic system comprises an interface (7), connected to the control unit (4) and configured to allow a user to:
- selectively enable or disable the sensors of the plurality of sensors (41, 42, 43, 44, 45, 46);
- selectively control the actuators of the plurality of actuators, wherein the control unit (4) is configured to generate commands to drive the actuators of the plurality of actuators in response to settings received from the user;
- display the measurement parameters or diagnostic parameters derived therefrom.

A3. The apparatus (1) according to paragraph A2, wherein the interface (7) is configured to show a synoptic representation (72) of the circuit to a user.

A4. The apparatus (1) according to paragraph A3, wherein the synoptic representation (72) is configured for:
- allowing the user to selectively enable or disable the sensors of the plurality of sensors (41, 42, 43, 44, 45, 46) and to selectively control the actuators of the plurality of actuators through interactions between the user and the synoptic representation (72), and
- showing the user the measurement parameters detected by the enabled sensors forming part of the plurality of sensors (41, 42, 43, 44, 45, 46). A5. The apparatus (1) according to any of the paragraphs from A2 to A4, wherein the interface (7) is a remote interface.

A6. The apparatus (1) according to paragraph A5, comprising a remote processor connected to the control unit (4) and to the interface (7),
wherein the interface (7) comprises an input device (71) configured to receive the settings from the user, wherein the remote processor is configured to send control signals to the control unit (4) as a function of the settings received from the user and wherein the control unit (4) is configured to issue commands to one or more of the actuators of the plurality of actuators, responsive to receiving the control signals.

A7. The apparatus (1) according to any of the preceding paragraphs, wherein the actuators of the plurality of actuators are selected from the following actuators:
- a plurality of electrovalves (EV1, EV2, EV3, EV4, EV5, EV6, EV7, EV8, EV9, EV10, EV11, EV12);
- an actuator of the compressor (35), configured to control the compressor (35);
- an actuator of the vacuum pump (31), configured to control the vacuum pump (31).

A8. The apparatus (1) according to any of the preceding paragraphs, wherein the sensors of the plurality of sensors are selected from the following sensors:
- a first load sensor (41), associated with the refrigerant fluid tank (20) and configured to detect a measurement parameter representing the weight of the refrigerant fluid tank (20);
- a second load sensor (42), associated with the waste oil collector (12) and with the charging oil tank (13) and configured to detect a measurement parameter representing the weight of the waste oil collector (12) and/or of the charging oil tank (13);
- a first pressure sensor (43), associated with an inlet or outlet leg of the circuit, connectable to the refrigeration system of the vehicle and configured to detect a measurement parameter representing the pressure of the refrigerant fluid in the inlet or outlet leg;
- a second pressure sensor (44), associated with the refrigerant fluid tank (20) and configured to detect a measurement parameter representing the pressure of the refrigerant fluid in the refrigerant fluid tank (20);
- a temperature sensor (45), associated with the refrigerant fluid tank (20) and configured to detect a measurement parameter representing the temperature of the refrigerant fluid in the refrigerant fluid tank (20);
- a compressor sensor (46), associated with the compressor (35) and configured to detect a measurement parameter representing the speed of the compressor (35).

A9. The apparatus (1) according to any of the preceding paragraphs, wherein the circuit has a first inlet 61, configured to be connected to the vehicle's refrigeration system in a low pressure zone, and a second inlet 62, configured to be connected to the vehicle's refrigeration system in a high pressure zone.

A10. The apparatus (1) according to any of the preceding paragraphs, wherein the control unit (4) is configured to operate a commutation between the online configuration and the offline configuration.

B1. A diagnostic system for an apparatus (1) for charging a refrigeration system of a vehicle, comprising:
- a plurality of sensors (41, 42, 43, 44, 45, 46) associable with the circuit and configured to detect measurement parameters representing physical quantities linked to one or more of the circuit components;
- a plurality of actuators, configured to control one or more of the components of the circuit;
- a control unit (4), configured for operating the apparatus in an online configuration, in which the apparatus is connected to the refrigeration system of the vehicle to perform the charging operations, and in an offline configuration, in which the apparatus is disconnected from the refrigeration system of the vehicle, and for receiving the measurement parameters detected by the sensors of the plurality of sensors (41, 42, 43, 44, 45, 46) and controlling the actuators of the plurality of actuators in the offline configuration of the apparatus.

B2. A diagnostic system for an apparatus (1) according to paragraph B1, wherein the control unit (4) is configured to operate a commutation between the online configuration and the offline configuration.

C1. A method for charging a refrigeration system of a vehicle by means of an apparatus (1) including a circuit and a diagnostic system, wherein the method comprises the following steps:
- connecting the circuit to the refrigeration system of the vehicle and extracting refrigerant fluid;
- receiving at a distiller (11) the refrigerant fluid extracted from the refrigeration system of the vehicle and separating oil and a gas fraction of the refrigerant fluid;
- compressing the gas fraction of the refrigerant fluid using a compressor (35);
- feeding the refrigerant fluid compressed by the compressor (35) to a refrigerant fluid tank (20);
- collecting the oil separated by the distiller (11) in a waste oil collector (12);
- creating a negative pressure in the refrigeration system of the vehicle by means of a vacuum pump (31);
- charging the refrigeration system of the vehicle with the charging oil from a charging oil tank (13) and with the refrigerant fluid from the refrigerant fluid tank (20),
characterized in that it further comprises the following steps:
- switching the apparatus (1), through a control unit (4), between an online configuration, in which the apparatus (1) is connected to the refrigeration system of the vehicle to perform the charging operations, and an offline configuration, in which the apparatus (1) is disconnected from the refrigeration system of the vehicle to perform internal checks for diagnostic purposes;
- in the offline configuration, detecting, with at least one plurality of sensors (41, 42, 43, 44, 45, 46) associated with the circuit, measurement parameters representing physical quantities linked to one or more of the circuit components;
- in the offline configuration, receiving at the control unit (4) the measurement parameters detected by the sensors of the plurality of sensors (41, 42, 43, 44, 45, 46);
- in the offline configuration, sending commands to one or more of the components of the circuit by means of a plurality of actuators controlled by the control unit (4).

C2. The method according to paragraph C1, wherein a user, through an interface (7),
- selectively enables or disables the sensors of the plurality of sensors (41, 42, 43, 44, 45, 46);
- selectively controls the actuators of the plurality of actuators, wherein the control unit (4) generates commands to drive the actuators of the plurality of actuators in response to settings received from the user;
- displays the measurement parameters or diagnostic parameters derived therefrom.

C3. The method according to paragraph C2, comprising the following steps:
- processing the measurement parameters with the control unit (4), based on reference data, and deriving diagnostic information regarding the state of the circuit or a component thereof; wherein the reference data are stored in a memory (40) which includes, for each vehicle type of a plurality of vehicle types, respective reference data associated with that vehicle type;
- updating the memory (40), including a step of saving new reference data associated with a new vehicle type, wherein the memory (40) receives the new reference data from a remote source through an Internet connection. C4. The method according to any of the paragraphs from C1 to C3, wherein the plurality of sensors includes a first load sensor (41), associated with the refrigerant fluid tank (20), so the measurement parameter represents the weight of the refrigerant fluid tank (20),
wherein, in the step of processing, the control unit (4) compares the weight of the refrigerant fluid tank (20) detected by the load sensor (41) with a predetermined minimum value and starts the step of charging if the weight of the refrigerant fluid tank (20) exceeds the predetermined minimum value.

## Claims

1. An apparatus (1) for charging a refrigeration system of a vehicle, wherein the apparatus (1) comprises a circuit, having a first inlet (61), configured to be connected to the refrigeration system in a low pressure zone and a second inlet (62), configured to be connected to the refrigeration system in a high pressure zone, to extract refrigerant fluid, wherein the circuit includes the following components:
- a distiller (11) configured to receive the refrigerant fluid extracted from the refrigeration system of the vehicle and to separate oil and a gas fraction of the refrigerant fluid;
- a compressor (35), configured to receive the gas fraction of refrigerant fluid from the distiller (11) and to compress it;
- a waste oil collector (12) for collecting the oil separated by the distiller (11);
- a refrigerant fluid tank (20), containing refrigerant fluid and configured to receive the refrigerant fluid compressed by the compressor (35);
- a vacuum pump (31), configured to create a negative pressure in the refrigeration system of the vehicle;
- a charging oil tank (13), configured to contain the oil used for charging,
wherein the circuit is configured to charge the refrigeration system of the vehicle with the charging oil from the charging oil tank (13) and with the refrigerant fluid from the refrigerant fluid tank (20),
the apparatus being **characterized in that** it further comprises a diagnostic system including:
a plurality of sensors (41, 42, 43, 44, 45, 46) associated with the circuit and configured to detect measurement parameters representing physical quantities linked to one or more of the circuit components;
- a plurality of actuators, configured to control one or more of the components of the circuit;
- a control unit (4), configured for
operating the apparatus in an online configuration, in which the apparatus is connected to the refrigeration system of the vehicle to perform the charging operations, and in an offline configuration, in which the apparatus is disconnected from the refrigeration system of the vehicle, and for
receiving the measurement parameters detected by the sensors of the plurality of sensors (41, 42, 43, 44, 45, 46) and controlling the actuators of the plurality of actuators in the offline configuration of the apparatus, wherein the control unit (4) is configured to operate a commutation between the online configuration and the offline configuration.

2. The apparatus (1) according to claim 1, wherein the plurality of sensors (41, 42, 43, 44, 45, 46) is configured to detect measurement parameters in the offline configuration of the apparatus (1), and wherein the control unit is configured to send commands to one or more of the components of the circuit by means of the actuators in the offline configuration of the apparatus.

3. The apparatus (1) according to claim 2, wherein the diagnostic system comprises an interface (7), connected to the control unit (4) and configured to allow a user toselectively enable or disable the sensors of the plurality of sensors (41, 42, 43, 44, 45, 46).

4. The apparatus (1) according to claim 2 or 3, wherein the diagnostic system is configured for selectively control the actuators of the plurality of actuators, wherein the control unit (4) is configured to generate commands to drive the actuators of the plurality of actuators in response to settings received from the user;

5. The apparatus (1) according to any of the preceding claims from 2 to 4, wherein the diagnostic system is configured to display the measurement parameters or diagnostic parameters derived therefrom.

6. The apparatus (1) according to any of the preceding claims from 3 to 5, wherein the interface (7) is configured to show a synoptic representation (72) of the circuit to a user.

7. The apparatus (1) according to claim 6, wherein the synoptic representation (72) is configured for:
- allowing the user to selectively enable or disable the sensors of the plurality of sensors (41, 42, 43, 44, 45, 46) and to selectively control the actuators of the plurality of actuators through interactions between the user and the synoptic representation (72), and
- showing the user the measurement parameters detected by the enabled sensors forming part of the plurality of sensors (41, 42, 43, 44, 45, 46).

8. The apparatus (1) according to any of the claims from 3 to 7, wherein the interface (7) is a remote interface.

9. The apparatus (1) according to claim 8, comprising a remote processor connected to the control unit (4) and to the interface (7).

10. The apparatus according to claim 9, wherein the interface (7) comprises an input device (71) configured to receive the settings from the user, and wherein the remote processor is configured to send control signals to the control unit (4) as a function of the settings received from the user and wherein the control unit (4) is configured to issue commands to one or more of the actuators of the plurality of actuators, responsive to receiving the control signals.

11. The apparatus (1) according to any of the preceding claims, wherein the actuators of the plurality of actuators includes a plurality of electrovalves (EV1, EV2, EV3, EV4, EV5, EV6, EV7, EV8, EV9, EV10, EV11, EV12).

12. The apparatus according to any of the preceding claims, wherein the actuators of the plurality of actuators are selected from the following actuators:
- an actuator of the compressor (35), configured to control the compressor (35);
- an actuator of the vacuum pump (31), configured to control the vacuum pump (31).

13. The apparatus (1) according to any of the preceding claims, wherein the sensors of the plurality of sensors are selected from the following sensors:
- a first load sensor (41), associated with the refrigerant fluid tank (20) and configured to detect a measurement parameter representing the weight of the refrigerant fluid tank (20);
- a second load sensor (42), associated with the waste oil collector (12) and with the charging oil tank (13) and configured to detect a measurement parameter representing the weight of the waste oil collector (12) and/or of the charging oil tank (13);

14. The apparatus (1) according to any of the preceding claims, wherein the sensors of the plurality of sensors are selected from the following sensors:
- a first pressure sensor (43), associated with an inlet or outlet leg of the circuit, connectable to the refrigeration system of the vehicle and configured to detect a measurement parameter representing the pressure of the refrigerant fluid in the inlet or outlet leg;
- a second pressure sensor (44), associated with the refrigerant fluid tank (20) and configured to detect a measurement parameter representing the pressure of the refrigerant fluid in the refrigerant fluid tank (20);
- a temperature sensor (45), associated with the refrigerant fluid tank (20) and configured to detect a measurement parameter representing the temperature of the refrigerant fluid in the refrigerant fluid tank (20);
- a compressor sensor (46), associated with the compressor (35) and configured to detect a measurement parameter representing the speed of the compressor (35).

15. A diagnostic system for an apparatus (1) according to any of the preceding claims, comprising:
- a plurality of sensors (41, 42, 43, 44, 45, 46) associable with the circuit and configured to detect measurement parameters representing physical quantities linked to one or more of the circuit components;
- a plurality of actuators, configured to control one or more of the components of the circuit;
- a control unit (4), configured for operating the apparatus in an online configuration, in which the apparatus is connected to the refrigeration system of the vehicle to perform the charging operations, and in an offline configuration, in which the apparatus is disconnected from the refrigeration system of the vehicle, and for receiving the measurement parameters detected by the sensors of the plurality of sensors (41, 42, 43, 44, 45, 46) and controlling the actuators of the plurality of actuators in the offline configuration of the apparatus, wherein the control unit (4) is configured to operate a commutation between the online configuration and the offline configuration..
